(19) **Europäisches Patentamt / European Patent Office / Office européen des brevets**

(11) **EP 4 593 432 A1**

(12) **EUROPEAN PATENT APPLICATION**
published in accordance with Art. 153(4) EPC

(43) Date of publication:
**30.07.2025 Bulletin 2025/31**

(21) Application number: 23868474.0

(22) Date of filing: **11.09.2023**

(51) International Patent Classification (IPC):
$H04W\ 4/48^{(2018.01)}$  $\quad H04W\ 4/80^{(2018.01)}$
$H04W\ 24/08^{(2009.01)}$  $\quad H04W\ 84/20^{(2009.01)}$
$B60R\ 25/20^{(2013.01)}$  $\quad B60R\ 25/24^{(2013.01)}$

(52) Cooperative Patent Classification (CPC):
B60R 25/20; B60R 25/24; H04W 4/48; H04W 4/80;
H04W 24/08; H04W 84/20

(86) International application number:
**PCT/KR2023/013584**

(87) International publication number:
**WO 2024/063420 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 KR 20220119328**

(71) Applicant: **LG INNOTEK CO. LTD
Gangseo-gu
Seoul 07796 (KR)**

(72) Inventors:
• **KIM, Jang Seob**
  **Seoul 07796 (KR)**
• **BAE, Sung Jun**
  **Seoul 07796 (KR)**
• **HAM, So Yeon**
  **Seoul 07796 (KR)**

(74) Representative: **Plasseraud IP
104 Rue de Richelieu
CS92104
75080 Paris Cedex 02 (FR)**

(54) **COMMUNICATION DEVICE AND COMMUNICATION METHOD THEREFOR**

(57) A communication method by which a communication device mounted on a vehicle and including a plurality of nodes communicates with a portable device, according to an embodiment of the present invention, comprises the steps of: detecting an abnormal mode from among the plurality of nodes according to UWB signal transmission and reception between the plurality of nodes; performing, by nodes excluding the abnormal node from among the plurality of nodes, UWB ranging with the portable device; and obtaining a position of the portable device according to a result of the UWB ranging

[FIG. 6]

**Description**

[Technical Field]

The present invention relates to a communication device and a communication method therefor, and more specifically, to a communication device mounted in a vehicle and a communication method therefor.

[Background Art]

Due to the development of wireless communication technology, the market for digital keys or smart keys that allow users to unlock or lock their vehicles remotely without having to directly insert a key into a vehicle is becoming active.

Since a digital key system needs to provide satisfactory theft prevention, security, and user convenience with respect to a vehicle, the digital key system should only operate when a digital key and a vehicle are within a certain distance. To this end, a digital key system includes a communication device mounted in a vehicle and a digital key and determines a distance between the digital key and the vehicle in real time through communication between the communication device mounted in the vehicle and the digital key.

Near-field communication (NFC) and Bluetooth are mainly used for communication between a digital key and a communication device mounted in a vehicle, but there have been attempts to use ultra-wideband (UWB).

[Disclosure]

[Technical Problem]

The present invention is directed to providing a communication method between a communication device mounted in a vehicle and a digital key.

[Technical Solution]

One aspect of the present disclosure provides a communication method by which a communication device mounted in a vehicle and including a plurality of nodes communicates with a portable device, which includes detecting an abnormal node from among the plurality of nodes by transmitting or receiving ultra-wideband (UWB) signals between the plurality of nodes, performing, by nodes excluding the abnormal node from among the plurality of nodes, UWB ranging with the portable device, and obtaining a position of the portable device according to a result of the UWB ranging.

The plurality of nodes may include a master node and a plurality of slave nodes, and the detecting of the abnormal node may include transmitting, by the master node, a UWB initiate signal to each of the plurality of slave nodes, receiving, by the master node, a UWB response signal in response to the UWB initiate signal from at least some of the plurality of slave nodes, and transmitting, by the master node, a UWB final signal in response to the UWB response signal to each of the at least some of the plurality of slave nodes.

The detecting of the abnormal node may include determining that a slave node among the plurality of slave nodes that does not transmit the UWB response signal within a predetermined period of time is the abnormal node.

The detecting of the abnormal node may include obtaining positions of the plurality of slave nodes using times acquired through the transmitting of the UWB initiate signal, the receiving of the UWB response signal, and the transmitting of the UWB final signal, and determining that a slave node among the plurality of slave nodes that has a small error with respect to a preset position is the abnormal node.

The performing of the UWB ranging with the portable device may include receiving, by the nodes excluding the abnormal node from among the plurality of nodes, a UWB initiate signal from the portable device, transmitting, by the nodes excluding the abnormal node from among the plurality of nodes, a UWB response signal to the portable device, and receiving, by the nodes excluding the abnormal node from among the plurality of nodes, a UWB final signal from the portable device.

The position of the portable device may be obtained using at least some of a time from when the portable device transmits the UWB initiate signal to when the portable device receives the UWB response signal, times from when the nodes excluding the abnormal node from among the plurality of nodes receive the UWB initiate signal to when the nodes excluding the abnormal node from among the plurality of nodes transmit the UWB response signal, times from when the nodes excluding the abnormal node from among the plurality of nodes transmit the UWB response signal to when the nodes excluding the abnormal node from among the plurality of nodes receive the UWB final signal, and a time from when the portable device receives the UWB response signal to when the portable device transmits the UWB final signal.

The detecting of the abnormal node may be initiated by a controller in the vehicle.

Another aspect of the present disclosure provides a communication device which includes a master node and a plurality of slave nodes, wherein the master node detects an abnormal node from among the plurality of slave nodes by transmitting or receiving UWB signals to or from the plurality of slave nodes, and the master node and slave nodes excluding the abnormal node from among the plurality of slave nodes perform UWB ranging with a portable device to obtain a position of the portable device.

When the master node detects the abnormal node, the master node may operate in an initiator mode of UWB ranging, and when the master node performs the UWB ranging with the portable device, the master node may operate in a responder mode of UWB ranging.

The communication device may be set to be mounted in a vehicle, and the portable device may be set to control opening/closing or starting of the vehicle.

[Advantageous Effects]

According to embodiments of the present invention, communication between a communication device mounted in a vehicle and a digital key is possible. Accordingly, even when a failure occurs in a portion of the communication device mounted in the vehicle, accurate positioning of the digital key is possible. According to the embodiments of the present invention, it is possible to identify radio frequency (RF) failure that cannot be detected by wired connection, there is no need for a separate time for time synchronization between nodes included in the communication device, accurate positioning of a portable device is possible, and it is possible to reduce unnecessary power consumption.

[Description of Drawings]

FIG. 1 is a schematic diagram illustrating a digital key system according to an embodiment of the present invention.
FIG. 2 is a block diagram of a vehicle and a portable device according to an embodiment of the present invention.
FIG. 3 is a flowchart illustrating a connection process between a communication device and a portable device according to an embodiment of the present invention.
FIG. 4 is a flowchart illustrating a ranging method between a communication device and a portable device according to an embodiment of the present invention.
FIG. 5 is a block diagram of a digital key system according to an embodiment of the present invention.
FIG. 6 is a flowchart illustrating a method in which a communication device of a digital key system according to an embodiment of the present invention communicates with a portable device.
FIG. 7 is a set of schematic diagrams of operation scenarios when a failure occurs in one of a plurality of nodes included in a communication device of a digital key system according to an embodiment of the present invention.
FIGS. 8 and 9 are flowcharts of a method in which a communication device of a digital key system according to an embodiment of the present invention detects an abnormal node.

[Best Mode of the Invention]

Hereinafter, exemplary embodiments of the present invention will be described in detail with reference to the accompanying drawings.

However, it should be understood that the technical spirit of the present invention is not limited to embodiments to be disclosed below but may be implemented in many different forms. It should be understood that within the scope of the present invention, one or more elements of each of the embodiments may be selectively combined and substituted.

In addition, the terms (including technical and scientific terms) used in the embodiments of the present invention have the same meaning as commonly understood by one of ordinary skill in the art to which the present invention belongs. It should be further understood that terms, such as those defined in commonly used dictionaries, should be interpreted as having a meaning that is consistent with their meaning in the context of the related art.

Further, the terms used in the embodiments of the present invention are provided only to describe embodiments of the present invention and are not for purposes of limitation.

In this specification, the singular forms include the plural forms unless the context clearly indicates otherwise, and the phrase "at least one element (or one or more elements) of an element A, an element B, and an element C" should be understood as including the meaning of at least one of all combinations obtained by combining the element A, the element B, and the element C.

Further, in describing elements of the present invention, terms such as "first," "second," "A," "B," "(a)," and "(b)" may be used.

These terms are used to distinguish an element from another element, but a nature, an order, or a sequence of the elements is not limited by the terms.

It will be understood that when an element is referred to as being "connected" or "coupled" to another element, it can be directly connected or coupled to the other element, intervening elements may be present, or it can be connected or coupled to the other element through another element.

Further, when an element is described as being formed "on (above)" or "under (below)" another element, the term "on (above)" or "under (below)" includes both of a case in which the two elements are in direct contact with each other or a case in which one or more elements are (indirectly) disposed between the two elements. In addition, the term "on (above)" or "under (below)" includes a case in which another element is disposed in an upward direction or a downward direction with respect to one element.

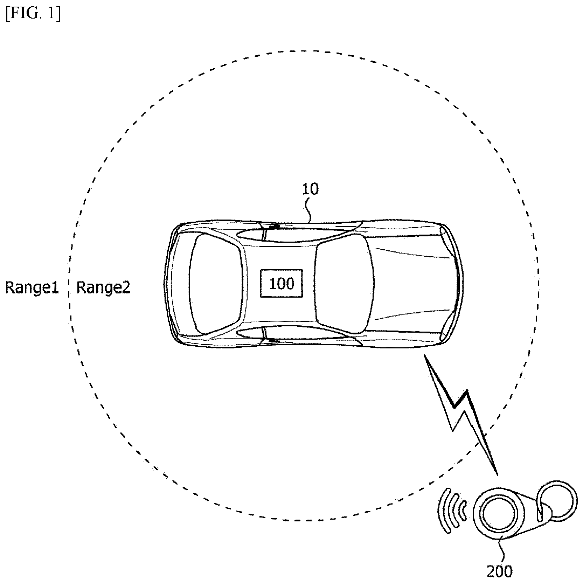

FIG. 1 is a schematic diagram illustrating a digital key system according to an embodiment of the present invention.

Referring to FIG. 1, the digital key system according to the embodiment of the present invention includes a communication device 100 mounted in a vehicle 10 and a portable device 200.

The vehicle 10 may be a transport means that can travel on roads or tracks. For example, the vehicle 10 may include not only a passenger car but also a transportable means such as a cargo truck or the like.

The portable device 200 is a device that controls the vehicle 10 from inside or outside the vehicle 10. The portable device 200 may be carried by a user. The portable device 200 may be a key fob or a portable terminal on which an application that realizes a function of the key fob is installed. The key fob may be a means for opening or closing a door of the vehicle 10 or starting the vehicle 10, from inside or outside the vehicle 10, and may be used interchangeably with a digital key or a smart key. The portable terminal may be a smartphone or tablet device having a communication function and a computing function.

The digital key system according to the embodiment of the present invention may open or close the door of the vehicle 10 or start the vehicle 10 according to a distance between the communication device 100 mounted in the vehicle 10 and the portable device 200.

For example, as a result of ranging performed by the communication device 100 and the portable device 200, the vehicle 10 may obtain the distance between the communication device 100 and the portable device 200 and determine whether the portable device 200 is in a first area Range1 or a second area Range2. For example, when it is determined that the portable device 200 is in the second area Range2, the digital key system may open or close the door of the vehicle 10 or start the vehicle 10. The opening or closing of the door of the vehicle 10 or the starting of the vehicle 10 may be performed automatically when conditions are satisfied, but the present invention is not limited thereto. The portable device 200 may provide a button for opening or closing the door of the vehicle 10, a button for starting the vehicle 10, etc. and may be implemented such that the button is activated when a corresponding condition is satisfied.

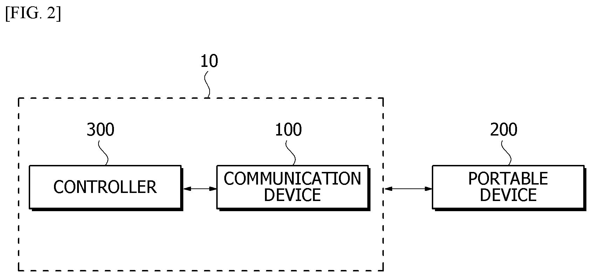

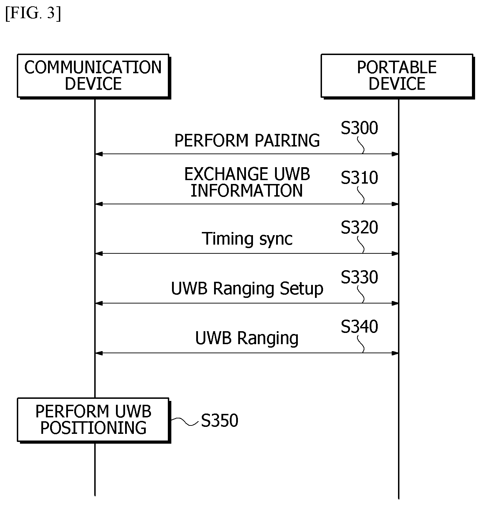

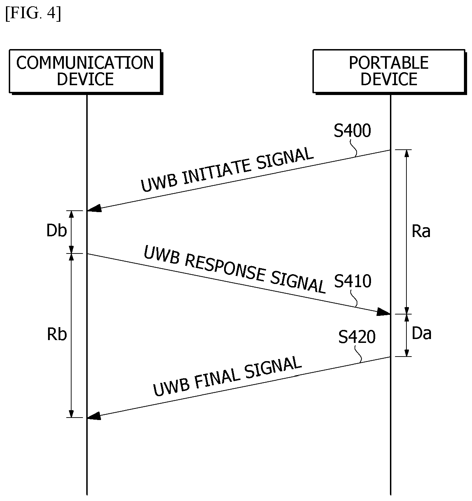

FIG. 2 is a block diagram of a vehicle and a portable device according to an embodiment of the present invention, FIG. 3 is a flowchart illustrating a connection process between the communication device and the portable device according to the embodiment of the present invention, and FIG. 4 is a flowchart illustrating a ranging method between the communication device and the portable device according to the embodiment of the present invention.

Referring to FIG. 2, according to the embodiment of the present invention, a communication device 100 is mounted in a vehicle 10 and communicates with a controller 300 of the vehicle 10 and a portable device 200.

According to the embodiment of the present invention, the communication device 100 and the portable device 200 support ultra-wideband (UWB) communication. Accordingly, not only is precise ranging possible between the communication device 100 and the portable device 200, but high security may also be ensured. According to the embodiment of the present invention, the communication device 100 and the portable device 200 may further support near-field communication (NFC) and Bluetooth.

Referring to FIGS. 2 and 3, when the portable device 200 approaches the vehicle 10, the communication device 100 of the vehicle 10 and the portable device 200 are paired (S300). In this case, the communication device 100 and the portable device 200 may be paired using Bluetooth. Next, the communication device 100 and the portable device 200 exchange UWB information (S310). This may be called UWB capability exchange. Subsequently, the communication device 100 and the portable device 200 synchronize time (S320), perform UWB ranging setup (S330), and then proceed with UWB ranging (S340). A distance between the communication device 100 and the portable device 200 is derived by the UWB ranging (S350).

The UWB ranging in operation S340 may be performed by double-sided twoway ranging (TWR-DS).

That is, referring to FIGS. 2 and 4, the portable device 200 transmits a UWB initiate signal to the communication device 100 (S400), the communication device 100 that receives the UWB initiate signal transmits a UWB response signal to the portable device 200 (S410), and the portable device 200 that receives the UWB response signal transmits a UWB final signal to the communication device 100 (S420). The UWB response signal may be an authentication signal of the communication device 100. The authentication signal may be a search (query) signal for searching for a position of the portable device 200. The UWB initiate signal, the UWB response signal, and the UWB final signal may each be signals generated based on a UWB impulse signal.

The distance between the communication device 100 and the portable device 200 in operation S350 may be derived using a time required for TWR-DS.

That is, the distance between the communication device 100 and the portable device 200 in operation S350 may be derived using at least some of a time Ra from when the portable device transmits the UWB initiate signal to when the portable device receives the UWB response signal, a time Db from when the communication device 100 receives the UWB initiate signal to when the communication device 100 transmits the UWB response signal, a time Rb from when the communication device 100 transmits the UWB response signal to when the communication device 100 receives the UWB final signal, and a time Da from when the portable device 200 receives the UWB response signal to when the portable device transmits the UWB final signal.

For example, the distance between the communication device 100 and the portable device 200 in operation S350 may be derived using the following equation.

[Equation 1]

$$ToF = ((Ra * Rb) - (Da * Db)) / (Ra + Rb + Da + Db)$$

Here, ToF denotes a time of flight and may be an indicator representing the distance between the communication device 100 and the portable device 200 that support UWB communication.

According to the embodiment of the present invention, the positioning of the portable device 200 may be performed using triangulation. For example, it is possible to derive coordinate information of the portable device 200 using coordinate information of a node participating in a ranging procedure used as the center of a circle. To this end, the node participating in the ranging procedure may be provided as a plurality of nodes, preferably three or more nodes, and the nodes may be placed apart from each other at different positions.

In this case, the positioning of the portable device 200 may be based on various positioning algorithms. For example, various positioning algorithms such as time difference of arrival (TDoA) of UWB signals, the above-described ToF-based TWR-DS, angle of arrival (AoA), angle of departure (Aod), time of arrival (ToA), etc., are used, and various methods such as trilateration, triangulation, etc. may be further used.

According to the embodiment of the present invention, the communication device 100 may include a plurality of nodes, and the plurality of nodes may be mounted in the vehicle 10 to be spaced apart from each other. Each of the plurality of nodes may support UWB communication and perform ranging with the portable device 200. Each node may be referred to as an anchor and may be referred to as a responder because the node transmits a UWB response signal in response to a UWB initiate signal of the portable device 200. The positions and number of the plurality of nodes are not limited.

Ranging between the plurality of nodes and the portable device 200 may be performed according to one-to-many TWR-DS (O2M TWR-DS). Accordingly, a time required for ranging may be shortened, and the accuracy of ranging may be increased.

However, when a failure occurs in some of the plurality of nodes but the digital key system or the vehicle 10 does not recognize the failure, this may result in inaccurate ranging, which may significantly increase power consumption of the communication device 100.

Accordingly, in the embodiment of the present invention, an abnormal node among the plurality of nodes is predetermined and excluded from ranging.

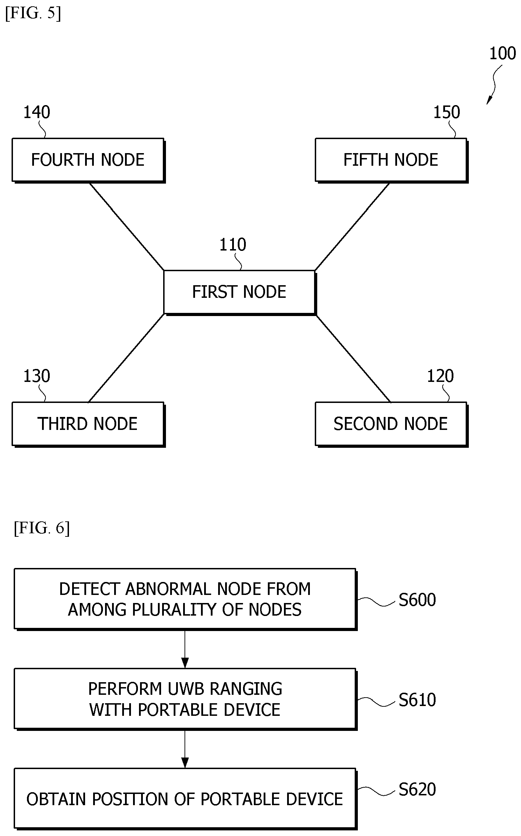

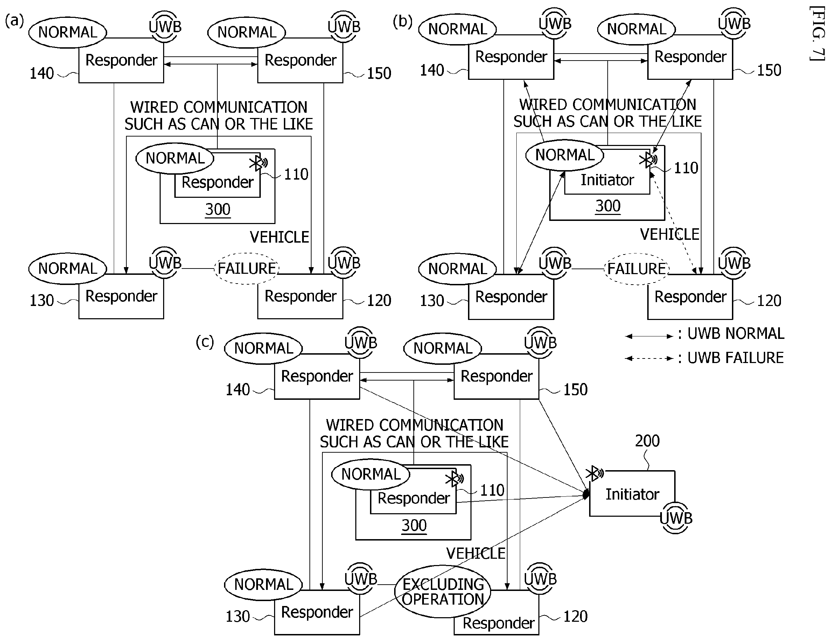

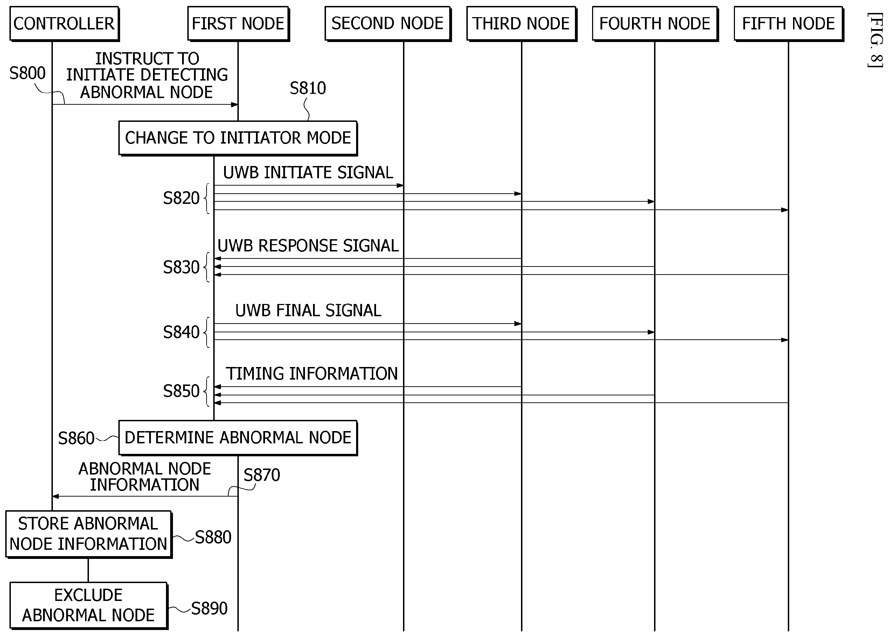

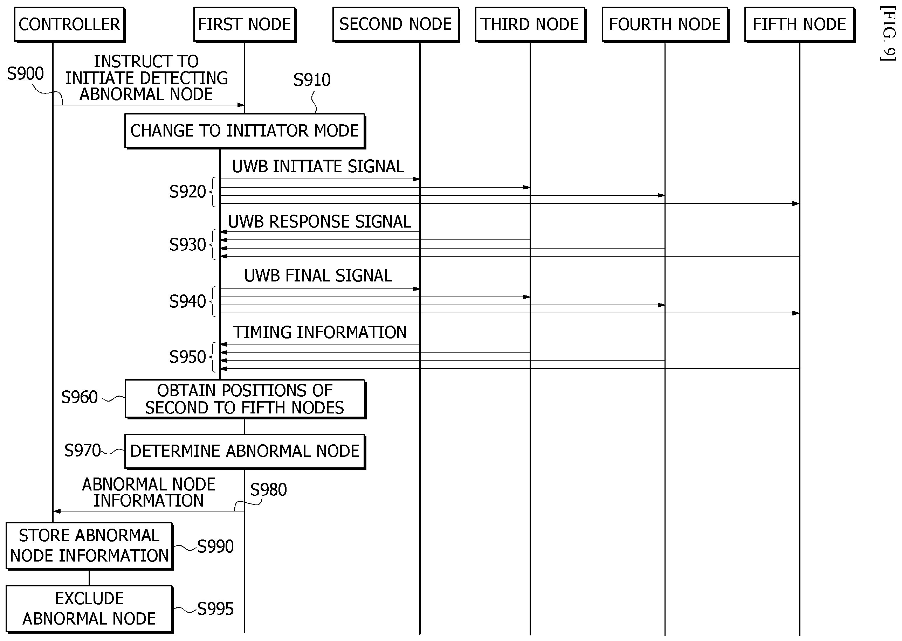

FIG. 5 is a block diagram of a digital key system according to the embodiment of the present invention, FIG. 6 is a flowchart illustrating a method in which a communication device of the digital key system according to the embodiment of the present invention communicates with a portable device, FIG. 7 is a set of schematic diagrams of operation scenarios when a failure occurs in one of a plurality of nodes included in the communication device of the digital key system according to the embodiment of the present invention, and FIGS. 8 and 9 are flowcharts of a method in which the communication device of the digital key system according to the embodiment of the present invention detects an abnormal node.

Referring to FIG. 5, the communication device 100 includes first to fifth nodes 110, 120, 130, 140, and 150. For convenience of description, this specification describes an example in which the five nodes 110, 120, 130, 140, and 150 are used, but the present invention is not limited thereto. Each node supports UWB communication.

According to the embodiment of the present invention, one of the first to fifth nodes 110, 120, 130, 140, and 150 may be a master node, and the remaining nodes may be slave nodes. Hereinafter, an example in which the first node 110 is a master node and the second to fifth nodes 120, 130, 140, and 150 are slave nodes will be described. The first to fifth nodes 110, 120, 130, 140, and 150 communicate with a portable device 200 and also communicate with other nodes in the communication device 100. The first node 110, which is the master node, may communicate with a controller 300 of a vehicle 10, and may control the second to fifth nodes 120, 130, 140, and 150, which are the slave nodes, or transmit control information received from the controller 300 of the vehicle 10 to the second to fifth nodes 120, 130, 140, and 150, which are the slave nodes.

The master node may be preset or set in real time. For example, the master node may be set by the controller 300 of the vehicle 10. For example, when a failure occurs in the first node 110 preset as the master node, the controller of the vehicle 10 may set one of the remaining nodes excluding the first node 110 as the master node.

Here, the controller 300 of the vehicle 10 may be referred to as a body domain controller (BDC).

As described above, each of the plurality of nodes included in the communication device 100 supports UWB communication. In addition, at least some of the plurality of nodes included in the communication device 100 further support Bluetooth. For example, the first node 110, which is the master node, may support Bluetooth and transmit or receive Bluetooth Low Energy (BLE) signals to or from the portable device 200. Alternatively, the communication device 100 may further include a Bluetooth node that supports Bluetooth in addition to the plurality of nodes that support UWB communication.

Referring to FIG. 6, the communication device 100 detects an abnormal node from among the plurality of nodes by transmitting or receiving UWB signals between the plurality of nodes 110, 120, 130, 140, and 150 (S600). Here, an example in which one of the plurality of nodes included in the communication device 100 110, 120, 130, 140, and 150, for example, the first node 110, detects an abnormal node is described, but the present invention is not limited thereto, and the controller 300 in the vehicle 10 that communicates with the first node 110 may detect an abnormal node using information collected by the first node 110 and transmit information on the abnormal node to the first node 110. The abnormal node is a node in which a failure or malfunction has occurred.

Next, nodes excluding the abnormal node from among the plurality of nodes included in the communication device 100, 110, 120, 130, 140, and 150 perform UWB ranging with the portable device 200 (S610) and obtain a position of the portable device 200 according to a result of the UWB ranging (S620). Here, for detailed content on operations S610 and S620, reference may be made to the content described with reference to FIGS. 3 and 4.

Hereinafter, in the communication device 100 including the first to fifth nodes 110, 120, 130, 140, and 150, an example in which the first node 110 is the master node, the second to fifth nodes 120, 130, 140, and 150 are the slave nodes, and a failure occurs in the second node 120, which is one of the slave nodes, will be described.

Referring to FIG. 7A, in a normal state, that is, in a state in which the communication device 100 has not initiated detecting an abnormal node, the first to fifth nodes 110, 120, 130, 140, and 150 in the communication device 100 operate in a responder mode. Here, the responder mode may be a mode set to receive a UWB initiate signal during UWB ranging. That is, in the normal state, the first to fifth nodes 110, 120, 130, 140, and 150 in the communication device 100 receive a UWB initiate signal from the portable device 200, which is in an initiator mode, and are set to transmit a UWB response signal in response thereto.

However, referring to FIG. 7B, when the communication device 100 initiates detecting an abnormal node, the first node 110, which is the master node in the communication device 100, is changed to be in the initiator mode, and the remaining nodes still operate in the responder mode. The abnormal node detection by the communication device 100 may be triggered by the controller 300 in the vehicle 10. Here, the initiator mode may be a mode set to transmit a UWB initiate signal during UWB ranging. For example, the controller 300 in the vehicle 10 may detect an abnormal operation of the communication device 100 on its own and request detection of an abnormal node from the communication device 100. Alternatively, the abnormal node detection by the communication device 100 may be triggered by a user's instruction. For example, when the user detects an abnormal operation of the communication device 100, the user may request detection of an abnormal node from the communication device 100 through the controller 300 in the vehicle 10 or a controller (not illustrated) in the communication device 100. Alternatively, the abnormal node detection by the communication device 100 may be performed periodically. For example, the abnormal node detection by the communication device 100 may be triggered at preset intervals by the user or the controller 300 in the vehicle 10. Alternatively, the abnormal node detection by the communication device 100 may be performed when an event occurs. For example, as in operation S300 of FIG. 3, when the communication device 100 and the portable device 200 are paired, or as in operation S330 of FIG. 3, when the UWB ranging setup is performed between the communication device 100 and the portable device, the abnormal node detection by the communication device 100 may be triggered.

As illustrated in FIG. 7B, when the first node 110, which is the master node in the communication device 100, is changed to be in the initiator mode and the remaining nodes still operate in the responder mode, the first node 110 transmits or receives UWB signals to or from the remaining nodes 120, 130, 140, and 150. As a result, it is assumed that the second node 120 is detected as being in an abnormal node.

Referring to FIG. 7C, when the second node 120 is detected as being in the abnormal node, the second node 120 is excluded from a ranging operation, and the first node 110 is changed back to be in the responder mode. Thereafter, all the remaining nodes 110, 130, 140, and 150 excluding the second node 120 operate in the responder mode and perform a ranging procedure with the portable device 200.

The method of detecting the abnormal node in the communication device 100 will be described in more detail with reference to FIGS. 8 and 9.

Referring to FIG. 8, first, the controller 300 in the vehicle 10 instructs the first node 110, which is the master node of the communication device 100, to initiate detecting an abnormal node (S800). When the controller 300 in the vehicle 10 detects an abnormal operation of the communication device 100, the controller 300 in the vehicle 10 may instruct the first node 110 to initiate detecting the abnormal node before starting a UWB session between the communication device 100 and the portable device 200 or upon receiving a request for detecting the abnormal node from the user through a user interface unit (not illustrated).

Next, the first node 110 is changed from being in a responder mode to being in an initiator mode (S810). In a normal state, that is, in a state before the first node 110 receives a message instructing to initiate detecting the abnormal node from the controller 300 in the vehicle 10, the first node 110 operates in the responder mode of UWB communication. However, when the first node 110 receives the message in operation S800, the first node 110 is changed to be in the initiator mode of UWB communication.

Next, the first node 110 transmits a UWB initiate signal to each of the remaining nodes 120, 130, 140, and 150 included in the communication device 100 (S820). Here, the UWB initiate signal may include information on a timing at which the first node 110 transmits the UWB initiate signal.

Next, the first node 110 receives a UWB response signal (S830). For example, the first node 110 may receive the UWB response signal from each of the third to fifth nodes 130, 140, and 150. Here, the UWB response signal may include information on a timing at which each of the third to fifth nodes 130, 140, and 150 receives the UWB initiate signal and information on a timing at which each of the third to fifth nodes 130, 140, and 150 transmits the UWB response signal.

Next, the first node 110 transmits a UWB final signal to each of the third to fifth nodes 130, 140, and 150 (S840). Here, the UWB final signal may include information on a timing at which the UWB response signal is received from each of the third to fifth nodes 130, 140, and 150 and information on a timing at which the UWB final signal is transmitted.

Next, the first node 110 receives information on a timing from when each of the third to fifth nodes 130, 140, and 150 transmits the UWB response signal to when the first node 110 receives the UWB final signal (S850).

Next, the first node 110 determines that the second node 120 that has not transmitted the UWB response signal within a predetermined period of time is an abnormal node (S860).

Next, the first node 110 transmits information on the abnormal node to the controller 300 in the vehicle 10 (S870), and the controller 300 in the vehicle 10 stores the information on the abnormal node (S880) and sets the abnormal node to be excluded from UWB ranging (S890).

Thereafter, the first node 110 is changed back to be in the responder mode of UWB communication, and the remaining nodes excluding the abnormal node from among the plurality of nodes included in the communication device 100 perform UWB ranging with the portable device 200 that is close to the vehicle 10.

Accordingly, since the abnormal node may be excluded from UWB ranging in advance before performing UWB ranging between the communication device 100 and the portable device 200, the accuracy of UWB ranging may be increased, and power waste due to the operation of the abnormal node may be reduced. Further, since the information on the timing is exchanged between the master node and slave nodes in the communication device 100 in the process of detecting the abnormal node, timing synchronization between the master node and the slave nodes may be achieved in advance, and a time required for timing synchronization during UWB ranging may be reduced.

Referring to FIG. 9, the controller 300 in the vehicle 10 instructs the first node 110, which is the master node of the communication device 100, to initiate detecting an abnormal node (S900). Hereinafter, description identical to that described with reference to FIG. 8 will be omitted.

Next, the first node 110 is changed from being in a responder mode to an initiator mode (S910).

Next, the first node 110 transmits a UWB initiate signal to each of the remaining nodes 120, 130, 140, and 150 included in the communication device 100 (S920). Here, the UWB initiate signal may include information on a timing at which the first node 110 transmits the UWB initiate signal.

Next, the first node 110 receives a UWB response signal (S930). For example, the first node 110 may receive the UWB response signal from each of the second to fifth nodes 120, 130, 140, and 150. Here, the UWB response signal may include information on a timing at which each of the second to fifth nodes 120, 130, 140, and 150 receives the UWB initiate signal and information on a timing at which each of the second to fifth nodes 120, 130, 140, and 150 transmits the UWB response signal.

Next, the first node 110 transmits a UWB final signal to each of the second to fifth nodes 120, 130, 140, and 150 (S940). Here, the UWB final signal may include information on a timing at which the UWB response signal is received from each of the second to fifth nodes 120, 130, 140, and 150 and information on a timing at which the UWB final signal is transmitted.

Next, the first node 110 receives information on a timing from when each of the second to fifth nodes 120, 130, 140, and 150 transmits the UWB response signal to when the first node 110 receives the UWB final signal (S950).

Next, the first node 110 may obtain a position of each of the second to fifth nodes 120, 130, 140, and 150 (S960). To this end, the first node 110 may obtain the position of each of the second to fifth nodes 120, 130, 140, and 150 using a time required for transmitting the UWB initiate signal, a time required for receiving the UWB response signal, and a time required for transmitting the UWB final signal. For example, the position of each of the second to fifth nodes 120, 130, 140, and 150 may be obtained using at least some of a time from when the first node 110 transmits the UWB initiate signal to each of the second to fifth nodes 120, 130, 140, and 150 to when the first node 110 receives the UWB response signal, a time from when each of the second to fifth nodes 120, 130, 140, and 150 receives the UWB initiate signal to when each of the second to fifth nodes 120, 130, 140, and 150 transmits the UWB response signal, a time from when the first node receives the UWB response signal from each of the second to fifth nodes 120, 130, 140, and 150 to when the first node transmits the UWB final signal, and a time from when each of the second to fifth nodes 120, 130, 140, and 150 transmits the UWB response signal to when each of the second to fifth nodes 120, 130, 140, and 150 receives the UWB final signal from the first node 110.

Next, the first node 110 detects the abnormal node using the position of each of the second to fifth nodes 120, 130, 140, and 150 obtained in operation S950 (S970). For example, the first node 110 may pre-store a position of each of the second to fifth nodes 120, 130, 140, and 150. The first node 110 may compare the pre-stored position of each of the second to fifth nodes 120, 130, 140, and 150 with the position obtained in operation S960, and as a result of the comparison, determine that a node having a predetermined error is the abnormal node.

Next, the first node 110 transmits information on the abnormal node to the controller 300 in the vehicle 10 (S980), and the controller 300 in the vehicle 10 stores the information on the abnormal node (S990) and sets the abnormal node to be excluded from UWB ranging (S9950).

Thereafter, the first node 110 is changed back to be in the responder mode of UWB communication, and the remaining nodes excluding the abnormal node from among the plurality of nodes included in the communication device 100 perform UWB ranging with the portable device 200 that is close to the vehicle 10.

Accordingly, since the abnormal node may be excluded from UWB ranging in advance before performing UWB ranging between the communication device 100 and the portable device 200, the accuracy of UWB ranging may be increased, and power waste due to the operation of the abnormal node may be reduced. Further, since the information on the timing is exchanged between the master node and slave nodes in the communication device 100 in the process of detecting the abnormal node, timing synchronization between the master node and slave nodes may be achieved in advance, and a time required for timing synchronization during UWB ranging may be reduced.

While the present invention has been particularly described with reference to the embodiments, the embodiments are only exemplary embodiments of the present invention. It will be understood by those skilled in the art that modified examples and applications in other forms may be made without departing from the spirit and scope of the present invention. For example, each component specifically shown in the embodiments may be embodied with modifications. In addition, it should be understood that differences related to these modified examples and applications fall within the scope of the present invention as defined in the appended claims.

[Reference Numerals]

    10: vehicle
    100: communication device
    200: portable device
    300: controller

**Claims**

1.  A communication method by which a communication device mounted in a vehicle and including a plurality of nodes communicates with a portable device, the communication method comprising:

        detecting an abnormal node from among the plurality of nodes by transmitting or receiving ultra-wideband (UWB) signals between the plurality of nodes;
        performing, by nodes excluding the abnormal node from among the plurality of nodes, UWB ranging with the portable device; and
        obtaining a position of the portable device according to a result of the UWB ranging.

2.  The communication method of claim 1, wherein the plurality of nodes include a master node and a plurality of slave nodes, and
    the detecting of the abnormal node includes:

        transmitting, by the master node, a UWB initiate signal to each of the plurality of slave nodes;
        receiving, by the master node, a UWB response signal in response to the UWB initiate signal from at least some of the plurality of slave nodes; and

transmitting, by the master node, a UWB final signal in response to the UWB response signal to each of the at least some of the plurality of slave nodes.

3. The communication method of claim 2, wherein the detecting of the abnormal node includes determining that a slave node among the plurality of slave nodes that does not transmit the UWB response signal within a predetermined period of time is the abnormal node.

4. The communication method of claim 2, wherein the detecting of the abnormal node includes:

obtaining positions of the plurality of slave nodes using times acquired through the transmitting of the UWB initiate signal, the receiving of the UWB response signal, and the transmitting of the UWB final signal; and determining that a slave node among the plurality of slave nodes that has a certain error with respect to a preset position is the abnormal node.

5. The communication method of claim 1, wherein the performing of the UWB ranging with the portable device includes:

receiving, by the nodes excluding the abnormal node from among the plurality of nodes, a UWB initiate signal from the portable device;
transmitting, by the nodes excluding the abnormal node from among the plurality of nodes, a UWB response signal to the portable device; and
receiving, by the nodes excluding the abnormal node from among the plurality of nodes, a UWB final signal from the portable device.

6. The communication method of claim 5, wherein the position of the portable device is obtained using at least some of a time from when the portable device transmits the UWB initiate signal to when the portable device receives the UWB response signal, times from when the nodes excluding the abnormal node from among the plurality of nodes receive the UWB initiate signal to when the nodes excluding the abnormal node from among the plurality of nodes transmit the UWB response signal, times from when the nodes excluding the abnormal node from among the plurality of nodes transmit the UWB response signal to when the nodes excluding the abnormal node from among the plurality of nodes receive the UWB final signal, and a time from when the portable device receives the UWB response signal to when the portable device transmits the UWB final signal.

7. The communication method of claim 1, wherein the detecting of the abnormal node is initiated by a controller in the vehicle.

8. A communication device comprising:

a master node; and
a plurality of slave nodes,
wherein the master node detects an abnormal node from among the plurality of slave nodes by transmitting or receiving ultra-wideband (UWB) signals to or from the plurality of slave nodes, and
the master node and slave nodes excluding the abnormal node from among the plurality of slave nodes perform UWB ranging with a portable device to obtain a position of the portable device.

9. The communication device of claim 9, wherein, when the master node detects the abnormal node, the master node operates in an initiator mode of UWB ranging, and when the master node performs the UWB ranging with the portable device, the master node operates in a responder mode of UWB ranging.

10. The communication device of claim 8, wherein the communication device is set to be mounted in a vehicle, and the portable device is set to control opening/closing or starting of the vehicle.

[FIG. 1]

[FIG. 2]

10

| 300 | 100 | 200 |
|---|---|---|
| CONTROLLER | COMMUNICATION DEVICE | PORTABLE DEVICE |

[FIG. 3]

| COMMUNICATION DEVICE | | PORTABLE DEVICE |
|---|---|---|

PERFORM PAIRING    S300

EXCHANGE UWB INFORMATION    S310

Timing sync    S320

UWB Ranging Setup    S330

UWB Ranging    S340

| PERFORM UWB POSITIONING | S350 |
|---|---|

[FIG. 4]

[FIG. 5]

100

140

FOURTH NODE

150

FIFTH NODE

110

FIRST NODE

130

THIRD NODE

120

SECOND NODE

[FIG. 6]

DETECT ABNORMAL NODE FROM
AMONG PLURALITY OF NODES — S600

PERFORM UWB RANGING
WITH PORTABLE DEVICE — S610

OBTAIN POSITION OF PORTABLE DEVICE — S620

[FIG. 7]

(a)

NORMAL — Responder — UWB ◄──────► NORMAL — Responder — UWB

140 — Responder          Responder — 150

WIRED COMMUNICATION
SUCH AS CAN OR THE LIKE

NORMAL
Responder — 110
300

VEHICLE

NORMAL — Responder — UWB ─── FAILURE ─── Responder — UWB

130 — Responder          Responder — 120

(b)

NORMAL — Responder — UWB ◄──────► NORMAL — Responder — UWB

140 — Responder          Responder — 150

WIRED COMMUNICATION
SUCH AS CAN OR THE LIKE

NORMAL
Initiator — 110
300

VEHICLE

NORMAL — Responder — UWB ─── FAILURE ─── Responder — UWB

130 — Responder          Responder — 120

◄──────► : UWB NORMAL
◄------► : UWB FAILURE

(c)

NORMAL — Responder — UWB ◄──────► NORMAL — Responder — UWB

140 — Responder          Responder — 150

WIRED COMMUNICATION
SUCH AS CAN OR THE LIKE

NORMAL
Responder — 110
300

200

Initiator
UWB

VEHICLE

NORMAL — Responder — UWB ─── EXCLUDING OPERATION ─── Responder — 120

130 — Responder

[FIG. 8]

EP 4 593 432 A1

16

[FIG. 9]

Nodes (columns): CONTROLLER, FIRST NODE, SECOND NODE, THIRD NODE, FOURTH NODE, FIFTH NODE

- S900: INSTRUCT TO INITIATE DETECTING ABNORMAL NODE
- S910: CHANGE TO INITIATOR MODE
- S920: UWB INITIATE SIGNAL
- S930: UWB RESPONSE SIGNAL
- S940: UWB FINAL SIGNAL
- S950: TIMING INFORMATION
- S960: OBTAIN POSITIONS OF SECOND TO FIFTH NODES
- S970: DETERMINE ABNORMAL NODE
- S980: ABNORMAL NODE INFORMATION
- S990: STORE ABNORMAL NODE INFORMATION
- S995: EXCLUDE ABNORMAL NODE

## INTERNATIONAL SEARCH REPORT

| International application No. |
| --- |
| **PCT/KR2023/013584** |

| A. | CLASSIFICATION OF SUBJECT MATTER |
| --- | --- |

**H04W 4/48**(2018.01)i; **H04W 4/80**(2018.01)i; **H04W 24/08**(2009.01)i; **H04W 84/20**(2009.01)i; **B60R 25/20**(2013.01)i; **B60R 25/24**(2013.01)i

According to International Patent Classification (IPC) or to both national classification and IPC

| B. | FIELDS SEARCHED |
| --- | --- |

Minimum documentation searched (classification system followed by classification symbols)

H04W 4/48(2018.01); G01S 1/02(2010.01); G01S 13/02(2006.01); G01S 13/76(2006.01); G01S 5/10(2006.01); G07C 9/00(2006.01); H04B 1/7163(2011.01); H04W 12/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: UWB, ranging, node, break down, detect, exclude, vehicle

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2022-0099790 A1 (HYUNDAI MOBIS CO., LTD.) 31 March 2022 (2022-03-31)<br>See paragraphs [0064] and [0207]-[0289]; claim 9; and figures 19 and 27. | 1-2,7-10 |
| A | | 3-6 |
| Y | KR 10-1040705 B1 (KOREA ELECTROTECHNOLOGY RESEARCH INSTITUTE) 13 June 2011 (2011-06-13)<br>See paragraphs [0013] and [0037]. | 1-2,7-10 |
| A | KR 10-2304970 B1 (APPLE INC.) 24 September 2021 (2021-09-24)<br>See paragraphs [0036]-[0041]; and figures 8a-9b. | 1-10 |
| A | KR 10-2019-0105049 A (APPLE INC.) 11 September 2019 (2019-09-11)<br>See paragraphs [0044]-[0125]; and figures 5-12. | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 December 2023** | **07 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/013584** |

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0155385 A (SAMSUNG ELECTRONICS CO., LTD.) 22 December 2021 (2021-12-22) See paragraphs [0051]-[0159]; and figures 5-17. | 1-10 |

Form PCT/ISA/210 (second sheet) (July 2022)

**INTERNATIONAL SEARCH REPORT**
Information on patent family members

International application No.

**PCT/KR2023/013584**

| Patent document cited in search report | | | Publication date (day/month/year) | Patent family member(s) | | | Publication date (day/month/year) |
|---|---|---|---|---|---|---|---|
| US | 2022-0099790 | A1 | 31 March 2022 | CN | 114325672 | A | 12 April 2022 |
| KR | 10-1040705 | B1 | 13 June 2011 | JP | 2011-047915 | A | 10 March 2011 |
| | | | | KR | 10-2011-0021053 | A | 04 March 2011 |
| | | | | US | 2011-0051608 | A1 | 03 March 2011 |
| | | | | US | 8340022 | B2 | 25 December 2012 |
| KR | 10-2304970 | B1 | 24 September 2021 | CN | 110944297 | A | 31 March 2020 |
| | | | | CN | 110944297 | B | 25 March 2022 |
| | | | | EP | 3629621 | A1 | 01 April 2020 |
| | | | | JP | 2020-053965 | A | 02 April 2020 |
| | | | | JP | 6775072 | B2 | 28 October 2020 |
| | | | | KR | 10-2020-0035205 | A | 02 April 2020 |
| | | | | US | 10652925 | B2 | 12 May 2020 |
| | | | | US | 2020-0100283 | A1 | 26 March 2020 |
| KR | 10-2019-0105049 | A | 11 September 2019 | CN | 110312644 | A | 08 October 2019 |
| | | | | CN | 110312644 | B | 28 June 2022 |
| | | | | CN | 114889553 | A | 12 August 2022 |
| | | | | JP | 2020-510567 | A | 09 April 2020 |
| | | | | JP | 6975245 | B2 | 01 December 2021 |
| | | | | KR | 10-2341709 | B1 | 20 December 2021 |
| | | | | US | 10285013 | B2 | 07 May 2019 |
| | | | | US | 11212642 | B2 | 28 December 2021 |
| | | | | US | 11627433 | B2 | 11 April 2023 |
| | | | | US | 2018-0234797 | A1 | 16 August 2018 |
| | | | | US | 2019-0297457 | A1 | 26 September 2019 |
| | | | | US | 2022-0191644 | A1 | 16 June 2022 |
| | | | | US | 2023-0239656 | A1 | 27 July 2023 |
| | | | | WO | 2018-148687 | A1 | 16 August 2018 |
| KR | 10-2021-0155385 | A | 22 December 2021 | CN | 113826026 | A | 21 December 2021 |
| | | | | EP | 3940419 | A1 | 19 January 2022 |
| | | | | EP | 3940419 | A4 | 01 June 2022 |
| | | | | US | 11546013 | B2 | 03 January 2023 |
| | | | | US | 2020-0366335 | A1 | 19 November 2020 |
| | | | | WO | 2020-230993 | A1 | 19 November 2020 |

Form PCT/ISA/210 (patent family annex) (July 2022)